# EUROPEAN PATENT SPECIFICATION

(11) **EP 3 789 209 B1**
(45) Date of publication and mention of the grant of the patent: **07.06.2023**
(21) Application number: 19195473.4
(22) Date of filing: 05.09.2019
(51) Int. Cl.: B60B 27/00, B60B 35/12, B60K 7/00, B60B 11/04

(54) **BRAKING SYSTEM FOR TWIN TIRE AXLES**
BREMSSYSTEM FÜR DOPPELREIFENACHSEN
SYSTÈME DE FREINAGE POUR ESSIEUX À DEUX PNEUS

(43) Date of publication of application: 10.03.2021
(73) Proprietor: KNORR-BREMSE Systeme für Nutzfahrzeuge GmbH, 80809 München (DE)
(72) Inventor: KRÜGER, Seven, 81476 München (DE); BLESSING, Michael, 80687 München (DE); GYÖRKE, Zsombor, 8360 Keszthely (HU); TOTH, Janos, 6000 Kecskemét (HU); HÖS, Levente, 1047 Budapest (HU); KOKREHEL, Csaba, 1119 Budapest (HU); PAHLE, Wolfgang, 83707 Bad Wiessee (DE)

(56) References cited:
- WO-A1-2005/005167
- CN-A- 107 284 224
- CN-A- 109 130 840
- US-A- 6 139 464
- US-A1- 2013 252 775
- US-A1- 2014 049 094

## Description

The present invention relates to a braking system for a twin tire axle of a long-haul commercial vehicle, a powertrain and, in particular, to a high-speed brake for a driven axle of an electrically-driven commercial vehicle.

Conventional commercial vehicles are driven by internal combustion engines or by electric drive engines, wherein the engine is placed on the chassis of the vehicle. The drive power of the engine may be transmitted to a differential gear, for example, by a cardan shaft and thereafter by half shafts to wheel hubs. These vehicles include conventional brakes that rotate with the same speed as the wheel, since they are placed after the last transmission stage in or near the wheel hub.

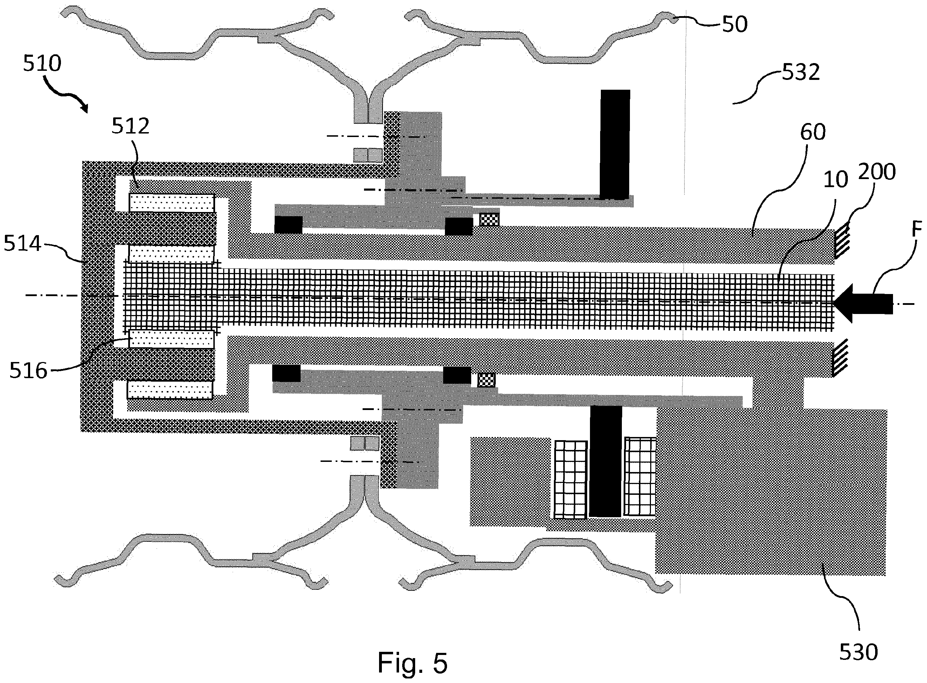

**Fig. 5** depicts an exemplary a conventional braking system for a twin tire axle used in long-haul commercial vehicles. The twin tire axle couples to rims 50 for the tires and to a drive engine for providing the drive power F (not shown in Fig. 5). The drive power F is provided to a drive shaft 10, which couples to a planetary gearbox 510 that transmits the drive power F to the rims 50. The shaft 10 couples the drive power F to a sun gear 516 of the planetary gearbox 510. The sun gear 516 couples to planetary gears on a planetary carrier 514. The planetary gear carrier 514 is rotationally fixed to the rims 50 and provides thus the drive power F to the rims 50. The outer gear ring 512 of the planetary gearbox 510 is rotationally fixed to an axle 60, which in turn is fixed to a frame 200 of the vehicle providing a rigid support. The brake system includes further a brake unit 530 with actuators that are configured to brake a braking disc 532 that is attached to the rims 50 so that the braking disc 532 rotates with the same angular speed as the planetary carrier 514 and the rims 50.

Since long-haul commercial vehicles require a large braking force, the brake unit 530 needs to provide a sufficient clamping force on the braking disc 532. Therefore, the braking disc 532 and the brake actuators are designed large enough to enable dissipation of energy needed to brake a long-haul commercial vehicle. Moreover, in particular for long-haul commercial vehicle, the braking system has to provide the strong braking force at high rotational speeds. Conventional multi-disc-brakes, which may have a compact form and nevertheless provide a sufficiently strong brake force, are not high rotational speeds. Instead these brakes operate best as low speed brakes, where the vehicle does not need to run of up to 100 km/h as for long-haul commercial vehicles.

For example, US 2013/252775 A1 discloses a conventional hub unit for an electrically driven wheel with a wet disc brake. Another electric wheel system for twin tires with an electric motor and a brake unit is disclosed in CN 107 284 224 A.

One problem of these conventional brakes relates to the fact that normal disc or drum brakes need significant space to accommodate the actuators that are able to provide sufficient clamping forces to brake the long-haul commercial vehicle reliably - even at higher speed. As a result, part of the conventional brake systems are arranged outside the rims. In particular, the actuator(s) and the caliper mechanics do not fit into the available space.

On the other hand, the use of electric engines has resulted in the wish to integrate more and more component as close as possible or inside the rims - in particular for a twin tire axle that is driven by the exemplary electric engine.

Therefore, there is a demand for providing a braking system that can be arranged inside the rims of a twin tire axle, but still provides a high braking force to brake the long-haul commercial vehicle reliably.

At least some of the above-mentioned problems are solved by a powertrain according to claim 1, and a vehicle according to claim 14. The dependent claims refer to specifically advantageous realizations of the subject matter of the independent claims.

Embodiments relate to a powertrain with a braking system for a twin tire axle of a long-haul commercial vehicle, wherein the twin tire axle couples to rims for the twin tires and to a driving engine. The braking system includes:
- a gearbox with at least one part configured to be attached to the rims;
- a shaft configured to connect the gear box with the drive engine; and
- a brake unit configured to brake a rotating part of the braking system that is rotatable at a higher rotational speed than the rims.

The gearbox and at least part of the brake unit are adapted to be placed (radially) inside the rims of the twin tires.

Within the present disclosure the term "rotating" relates to rotations about the rotational axis of the wheels and relative to the vehicle body. Thus, rotationally fixed means that rotations about the wheel axis relative to the vehicle body are not possible. The term "inside the rims" means inside a cylinder that extends along the rotational axis in the region where there is bound in radial direction by the rims or tires.

In addition, the term "commercial vehicle" shall include various types of commercial vehicles such as trucks, heavy duty trucks, distribution trucks, buses and other vehicles that be used to transport people and goods. The term "long haul" shall limit the claimed subject matter only in that the brake system is usable even at vehicle speeds of 50 km/h or 80 km/h and faster.

According to another embodiment, the brake unit is a disc brake or drum brake with the disc or drum being the rotating part and with at least one brake actuator to brake the disc or drum, wherein at least part of the brake actuator (e.g. a caliper) and/or the disc or drum are arranged inside the rims.

According to yet another embodiment, the vehicle comprises a non-rotating/rigid main axle and the gear box is a planetary gear box with a ring gear, a planetary carrier and a sun gear. The sun gear is driven by the engine via the shaft, one of the ring gear and the planetary carrier is rotationally fixed to the rims, and the other of the ring gear and the planetary carrier is fixed to the main axle.

According to yet another embodiment, the shaft comprises a hollow portion surrounding at least partially the main axle. The planetary carrier may be rotationally fixed to the main axle.

According to yet another embodiment, the main axle comprises a hollow portion surrounding at least partially the shaft, the ring gear is rotational fixed to the main axle, and the planetary carrier is rotationally fixed to the rims.

According to yet another embodiment the main axle is formed a hollow shaft surround at least partially the shaft, the planetary carrier is rotational fixed to the main axle, and the ring gear is rotational fixed to the rims.

According to yet another embodiment the rotating part of the brake is rotationally fixed to shaft.

According to yet another embodiment, the main axle is formed a hollow shaft surrounding at least partially the shaft, and the ring gear is rotational fixed to the main axle.

According to yet another embodiment, the braking system includes an additional hollow shaft surrounding partially the main axle, and an additional gear box is arranged between the rims and the additional hollow shaft. The planetary carrier of the additional gear box may be rotationally fixed to the main axle. The rotating part may be rotationally fixed to the additional hollow shaft.

According to yet another embodiment, the gear box provides the only bearing for the shaft inside the rims.

Further embodiments relate to a powertrain for a long-haul commercial vehicle, wherein the powertrain includes a drive engine, and a braking system as defined before.

According to yet another embodiment the drive engine is an electric engine. Optionally, the electric engine may or may not be integrated into the powertrain to form an integrated unit.

According to yet another embodiment the powertrain includes an additional gear box arranged between the drive engine and the brake system.

Further embodiments relate to a commercial vehicle, in particular a long-haul vehicle with a twin tire axle, with a powertrain as defined before.

Embodiments provide the advantage of enabling a small brake unit by using a gearbox to increase the rotational speed of the braked rotating part relative to the rims. Therefore, the rotational part rotates with a higher rotational speed and thus only a lower clamping force is needed in order to achieve the same braking effect, because the heat dissipation and thus the braking effect increases with the rotational speed. As a result, the actuators of the brake unit can be made smaller and therefore can be arranged inside the space of the rims. For example, the gear box can be placed in the outer rim, whereas the brake unit can be placed in the inner rim. Therefore, the advantage of placing the brake on a higher speed shaft with the same brake performance can be reached with smaller brake torque and brake force. With higher rotational speed the dimension of the brake can be reduced especially if the brake actuator is electrical. In particular for electric vehicle, the smaller actuators provide the further advantage of saving valued electric energy.

Thus, advantageous embodiments implement a high-speed brake by placing the rotating part of the brake (e.g. disc, drum etc.) on the input shaft of the outer planetary gear, the stand still parts (e.g. caliper, actuator) is fixed to the rigid axle. The driven side of the outer planetary gear is driving the wheels. In a different realization the driven side of the outer planetary gear drives the wheels that drive the input side of the additional second planetary gear. The brake is rotating with the driving side of the second planetary gear.

Further advantages relate to the possibility to integrate the whole drive train (electric motor, gearbox(es), drive shafts and brake) in one axle, while still allowing to place the brake on a higher speed shaft. However, embodiments do cover not only the electric actuator(s) but also the pneumatic and hydraulic. The transmission stages can still be divided in the drive train and the brake can be placed on different shafts with different higher rotational speed.

A problem of conventional brakes, where the last gearbox is in front of the wheel hub or integrated in the hub, relates to the fact the high-speed brake is to be shifted in direction of the axle middle and thus compromise the packaging advantages of the wheel brake/ e-drive train unit. Embodiments provide an efficient way to overcome this problem by creating installation space for the electric drive train by placing a last stage gearbox behind the wheel hub or, more specifically, an outer planetary gear is placed in the outer rims of the driven rear axle.

Some examples of the systems will be described in the following by way of examples only, and with respect to the accompanying figures, in which:
- Fig. 1a: depicts a braking system according to an embodiment of the present invention;
- Fig. 1b: depicts a kinematic scheme of the embodiment of Fig. 1a;
- Fig. 2a: depicts another embodiment of the braking system;
- Fig. 2b: depicts a braking system according to yet another embodiment;
- Fig. 2c: depicts the kinematic scheme for the embodiments as shown in Fig. 2a and 2b;
- Fig. 3a: depicts the braking system according to yet another embodiment;
- Fig. 3b: depicts the kinematic scheme of the embodiment of Fig. 3a;
- Fig. 4a: depicts yet another embodiment of the brake system;
- Fig. 4b: depicts the kinematic scheme of the embodiment of Fig. 4a;
- Fig. 5: depicts a conventional braking system for a twin tire axle used in long-haul commercial vehicles.

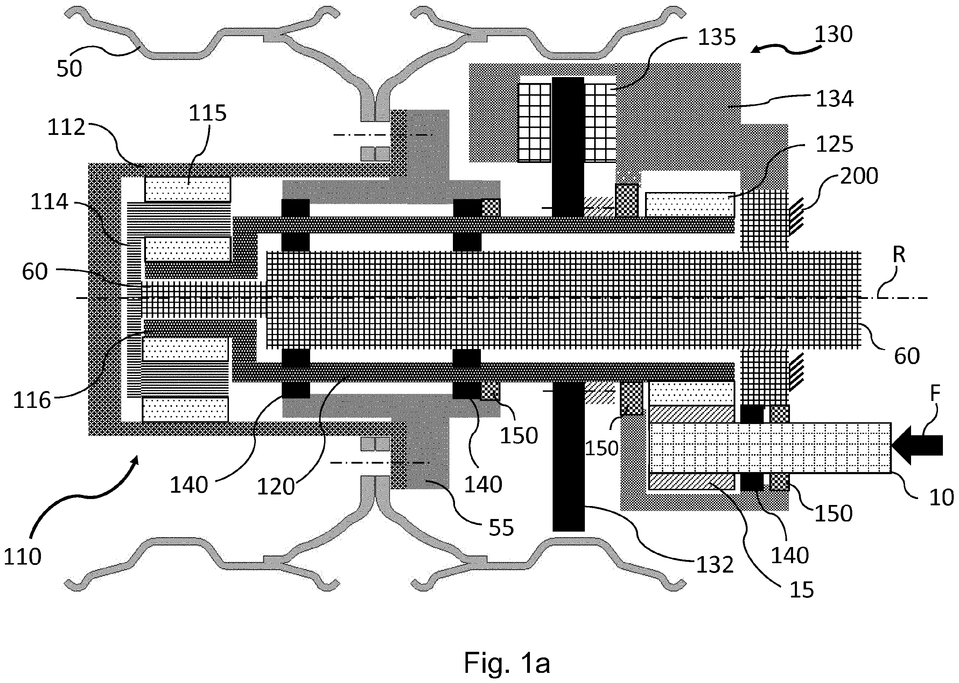

**Fig. 1a** depicts a braking system according to an embodiment of the present invention that is suitable for a twin tire axle of a long-haul commercial vehicle. For these vehicles the brake should fully operational of up to speeds of 100 km/h or even more. The twin tire axle couples to rims 50 for the twin tires and couples to an engine (not shown). The braking system includes a gearbox 110 between the rims 50 and a shaft 120 that provides a connection to the engine. The engine provides the drive power F coupled to a drive shaft 10 that in turn couples to the shaft 120 via a toothed wheel 15 on the drive shaft 10 and a further toothed wheel 125 arranged on the shaft 120.

The brake system further includes a brake unit 130 configured to brake a rotating part 132 (e.g. a braking disc) that rotates together with the shaft 120 and thus at a higher rotational speed than the rims 50. The brake unit 130 further includes one or more brake actuators 134 and brake pads 135 (e.g. a caliper) on both sides of the brake disc 132 to exert clamping forces on the brake disc 132 generated by the brake actuator(s) 134 for a desired braking.

In particular, the gearbox 110 as well as the brake unit 130 (or major parts thereof) are arranged (radially) inside the rims 50 of the twin tires. The twin tire axle is held by a main axle 60 and the shaft 120 is formed as a hollow shaft surrounding the main axle 60 and supported by a plurality of bearings 140 to provide a rotational bearing of the shaft 120 on the main axle 60. The main axle 60 may be attached to frame 200, e.g. a portion that is not rotatable relative to a vehicle body and can provide sufficient support to hold the twin tires. The terms "rotation" and "rotationally" refers to rotations about the axis R around which the rims 50 rotates during driving and not, for example, to a rotational axis of the suspension.

In addition, to protect the rotational bearings 140 and the various gears, there are one or more sealing elements 150 provided around the shaft 120 and the drive shaft 10 to seal the interior part along the power transmission from the engine to the rims 50.

In this embodiment of Fig. 1a, the gearbox 110 is a planetary gear box with a ring gear 112, a planetary carrier 114 with planetary gears and a sun gear 116. The sun gear 116 is driven by the shaft 120. The planetary carrier 114 is rotationally fixed to the main axle 60. The ring gear 112 is rotationally fixed to the rims 50. For example, the ring carrier 114 includes a plurality of planetary gears 115 that couple the sun gear 116 to the ring gear 112.

Since the brake disc 132 rotates together with the shaft 120, it rotates at a higher rotational speed than the rims 50. The wheel speed is caused by the gear ratio provided by the gearbox 110. Compared to conventional brake systems, the clamping force of a given braking event can be lowered to achieve the same braking effect, because the dissipated energy increases with the rotational speed of the brake disc for a given clamping force.

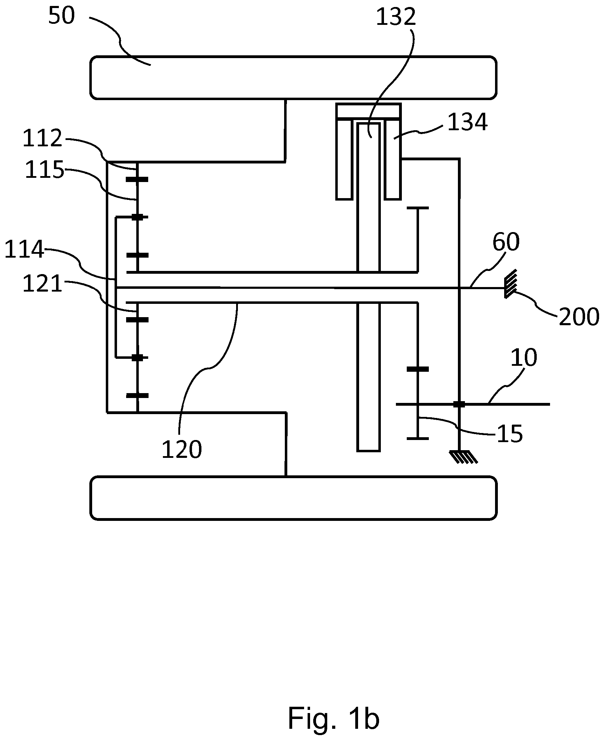

**Fig. 1b** depicts a kinematic scheme of the embodiment of Fig. 1a. Again, the engine couples to the drive shaft 10 which in turn couples to a toothed wheel 15 that transmits the drive power to the shaft 120 that is formed as a hollow shaft around the main axle 60. The hollow shaft 120 includes at an end portion along the drive power transmission a toothed wheel 121 (sun gear) that couples to the planetary gears 115. The planetary gears 115 are attached to the planetary carrier 114 that is rotationally fixed to the main axle 60. Therefore, the planetary gears 115 rotate about the planetary carrier 114, but not about the main axle 60. The planetary gears 115 couple to the toothed portion of the ring gear 112 which in turn is rotationally fixed to the rims 50 to submit the drive power to the rims 50. The braking disc 132 is rotationally fixed to the shaft 120 and is braked by the brake actuators 134 that are rigidly attached to a frame portion 200 of the vehicle.

In summary, in this embodiment, the planetary gear-set 110 is formed between the rims 50 and the brake assembly, which may be integrated into a wheel hub. The drive shaft 10 may come from a previous transmission stage (e.g. a differential gearbox) or directly from an electric motor. This drive shaft 10 is connected to the hollow shaft 120 with a gear stage 15, 125. This gear stage 15, 125 may be encapsulated, and its housing includes a bearing support 140 and sealing 150 of the drive shaft 10 and the sealing 150 of the hollow shaft 120 as well. The brake is fixed to the before mentioned hollow shaft 120 which is rolling on two bearings 140 on the fixed main axle 60. The above-mentioned planetary gear 110 is placed at the end of the fixed main axle 60. The planetary wheel carrier 114 is fixed and connected to the main axle 60. The hollow shaft 120 with the brake defines the sun gear 116 for the planetary gearbox 110. The ring gear 112 is formed in the housing which is directly connected to the rims 50 and has bearing support 140 with sealing 150 on the drive shaft 10.

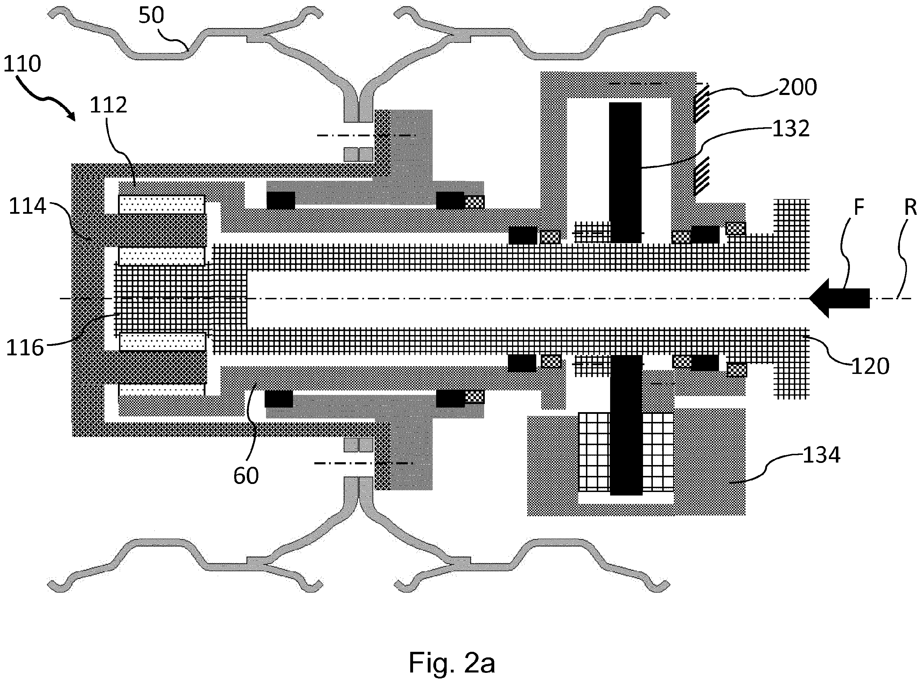

**Fig. 2a** depicts another embodiment of the braking system. In this embodiment, the drive power F couples to the shaft 120 directly that is placed at a central position along the rotational axis R. In comparison to the embodiment of Fig. 1a, there are no additional drive shaft and toothed wheels 115, 125 (but could be also present in the direction towards the engine). Again, a planetary gear box 110 is provided between the shaft 120 and the rims 50. However, in this embodiment the planetary carrier 114 is rotationally fixed to the rims 50 and the ring gear 112 is rotationally fixed to the main axle 60 and from there to the frame 200. The planetary carries 114 rotates in the embodiment about the rotational axis R. The main axle 60 is now formed a hollow shaft around the shaft 120. Again, the braking disc 132 is attached to the shaft 120 and is braked by the brake actuator(s) 134 as it was described in Fig. 1a.

All other components are formed as in the previous embodiment and there is no need for a repetition of the corresponding description.

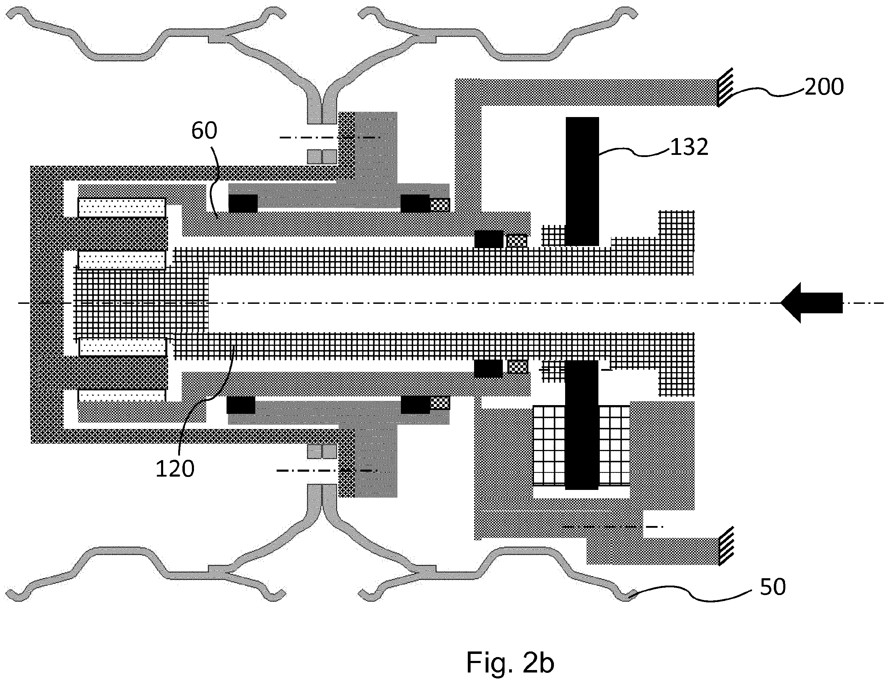

**Fig. 2b** depicts a braking system according to yet another embodiment. In comparison to the embodiment of Fig. 2a, the brake disc 132 is not surrounded by a housing. Therefore, this embodiment provides the advantage that the braking disc 132 can be more easily cooled and the support of the main axle 60 is more solid.

All other components are formed as in the previous embodiment and there is no need for a repetition of the corresponding description.

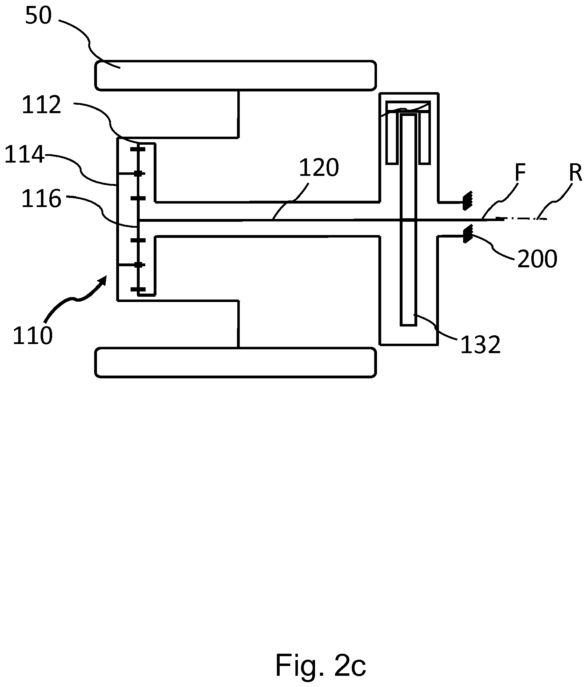

**Fig. 2c** illustrates the kinematic scheme for the embodiments as shown in Fig. 2a and 2b that have the same kinematic. In these embodiments the drive power F couples to the shaft 120 at the rotational axis R which transmits the drive power F via the planetary gearbox 110 to the rims 50. Again, the drive power F is transmitted along the shaft 120 to the sun gear 116 of the exemplary planetary gearbox 110 and thereafter to the rims 50 driven by the planetary carrier 114. The ring gear 112 is rotationally fixed to the frame 200. The brake disc 132 is rotationally fixed to the shaft 120.

In summary, in these embodiments, the rotational speed of the brake 132 is again higher than the wheel speed achieved by the planetary gear-set 110 arranged between the rims 50 and the brake assembly, which is integrated into the wheel hub. The shaft 120 coming from the previous transmission stage (e.g. a differential gear box) or directly from the electric motor, is connected directly to the planetary gear-set 110 as the sun gear 116. The brake is fixed to the drive shaft 120, which is rolling on two bearings 140 inside of the fixed main axle 60. The bearings 140 and the brake assembly are separated from each other and from the environment by sealings 150. The above-mentioned planetary gear 110 is placed at the end of the fixed main axle 60. The ring gear 112 is fixed and connected to the main axle 60. The drive shaft 120 with the brake disc 132 gives the sun gear 116 for the planetary gearbox 110. The planetary gear carrier 114 is formed in the housing which is directly connected to the rims 50 and has bearing support 140 with the sealing 150 on the fixed main axle.

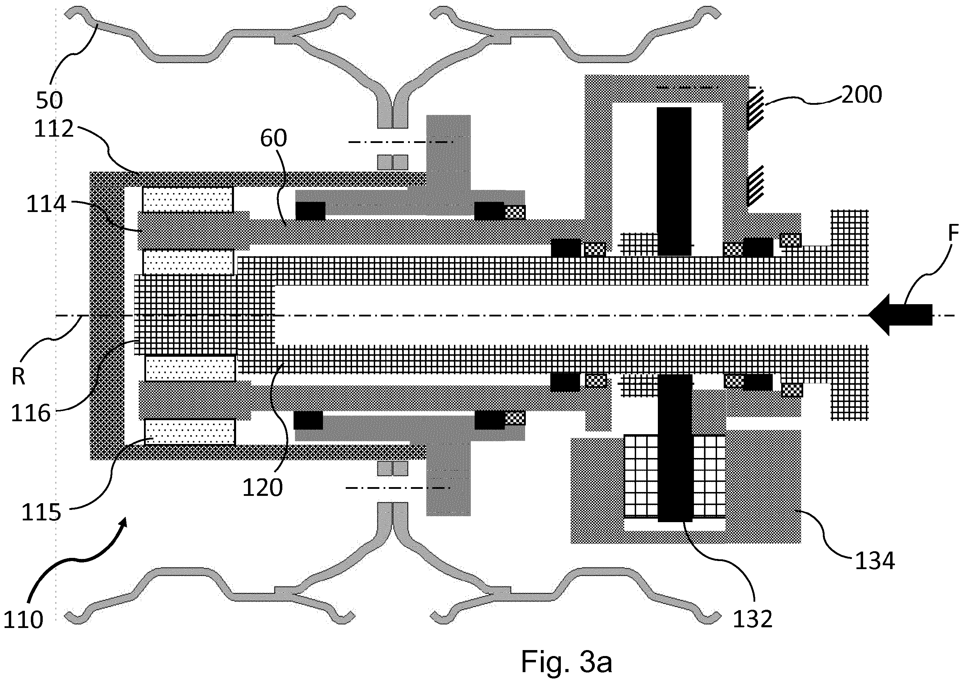

**Fig. 3a** depicts the braking system according to yet another embodiment. When compared to the embodiment as shown in Fig. 2a, the braking system of this embodiment differs only in that the rims 50 is rotationally fixed now to the ring gear 112 of the planetary gear box 110. The planetary carrier 114 is now rotationally fixed to the main axle 60 and from there to the frame 200. The sun gear 116 is again driven by the shaft 120. Therefore, the planetary carrier 114 together with the planetary gears 115 do not rotate about the rotational axis R.

Again, the braking disc 132 is attached to the shaft 120 as in the embodiment of Fig. 2a and the brake actuators 134 provide the clamping force for the disc 132.

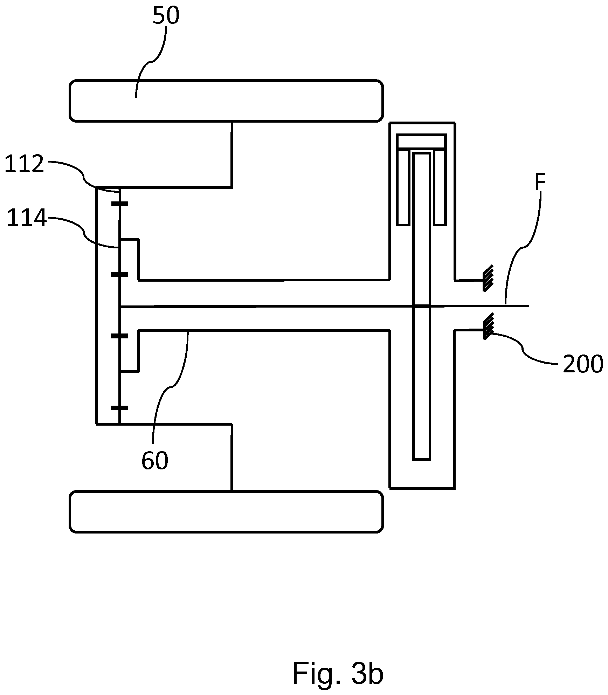

**Fig. 3b** illustrates the kinematic scheme of the embodiment of Fig. 3a, which differs from the kinematic scheme as shown in Fig. 2c only in that the drive power F is now transmitted from the ring gear 112 to the rims 50, whereas the ring carrier 114 is now attached (e.g. via the axle 60) to the frame 200

In summary, this embodiment differs from the embodiment shown in Fig. 2a in that the planetary gear carrier 114 is fixed and connected to the main axle 60 and the drive shaft 120 with the brake 132 gives the sun gear 116 for the planetary gearbox 110. The ring gear 112 is formed in the housing which is directly connected to the rims 50. Therefore, different ratio can be reached when compared to the second embodiment.

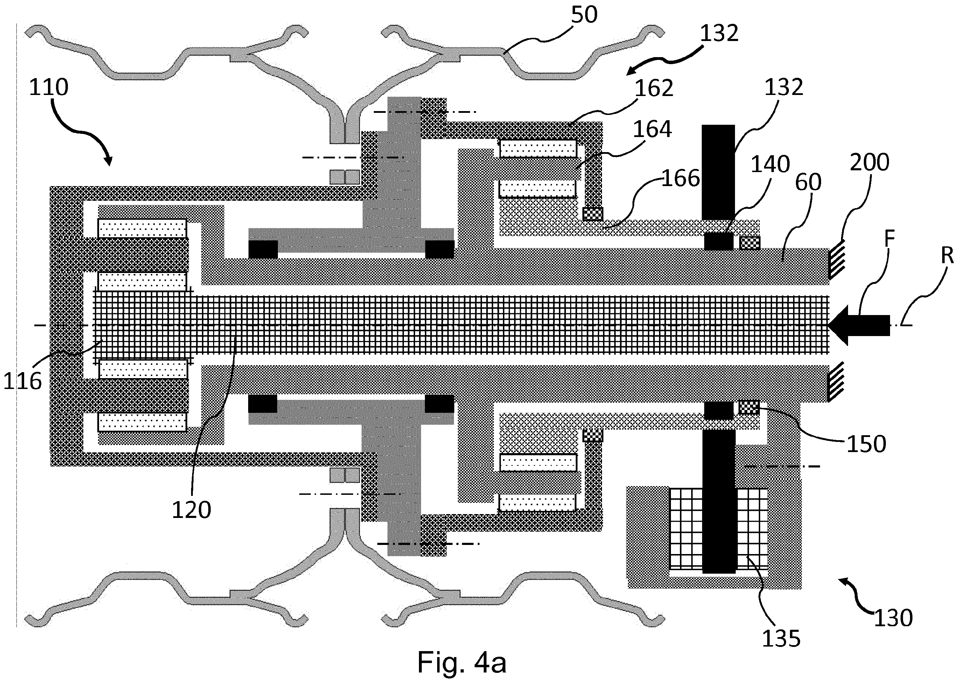

**Fig. 4a** depicts yet another embodiment of the brake system. The transmission of the drive power F from the shaft 120 (can be a solid shaft at a central position) to the rims 50 can be the same as in the embodiment of Fig 2a. It differs from the embodiment shown in Fig. 2a by the placement of the brake unit 130 with a brake disc 132 between the brake pads 135. Now, the brake unit 130 is not placed on the shaft 120, but couples to the rims 50 via an additional planetary gear box 160. As for the other embodiments, the rotational speed of the brake disc 132 is higher than the wheel speed.

As before, there is the planetary gear-set 110 between the rims 50 and the drive shaft 120 is integrated into the wheel hub and reduces the rotational speed and increase the propulsion torque. The drive shaft 120 coming from the previous transmission stage (e.g. a differential) or directly from the electric motor is again connected directly to the planetary gear-set 110, as the sun gear 116. In this embodiment no bearing support 140 is needed, as the bearing function is provided by the planetary gear-set 110.

There is an additional planetary gear-set 160 between the rims 50 and the brake 132, which is arranged in addition to the before-mentioned first planetary gear stage 110. The brake 132 is fixed to the sun gear 166 of the additional planetary gear-set 160 and rolling on one bearing 140, a second bearing support is provided by the additional planetary gear-set 160. This additional planetary gear-set 160 is increasing the rotational speed. Therefore, the rotational speed of the brake 132 is higher than the rims 50. The ring gear 162 of the additional planetary gear-set 160 is fixed to the rims 50 and has bearing support 140 on the fixed main axle 60. The planetary gear carrier 164 of planetary gearbox 160 and the ring gear of planetary gearbox 110 are fixed main axle 60 which is not rotating about the rotational axis R. Rotating parts are separated from the environment by sealings 150.

A specific advantage of this realization is the possibility to use the conventional connection of the caliper that hold the brake pads 135 to the rigid axle 60 (see Fig. 5). There is no need to displacement of the caliper holder with respect to the disc 132 as in the embodiment of Fig. 1b. In addition, there is no need for a structure around the brake to connect to the rigid axle 60 to the wheel hub as in the embodiment of Fig. 3b.

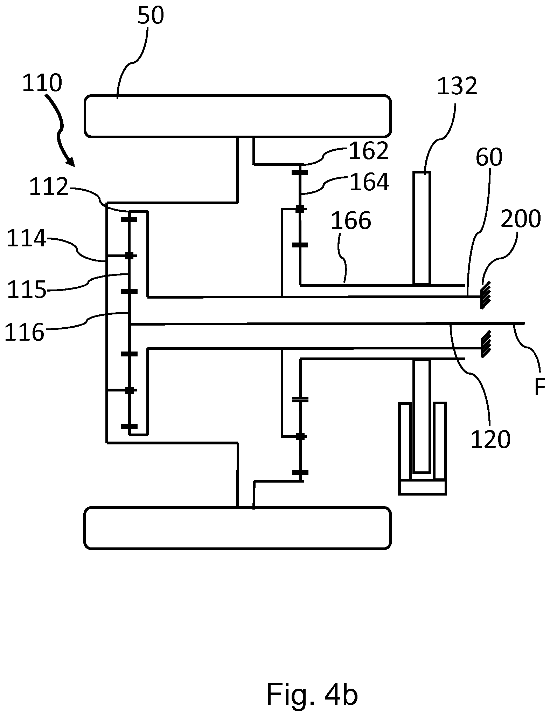

**Fig. 4b** illustrates the kinematic scheme of the embodiment of Fig. 4a. The drive power F is provided by the shaft 120 which is surrounded by a hollow main axle 60 that is fixed to the frame 200. The shaft 120 provides the drive power F to the sun gear 116 of the planetary gearbox 110 that transmits the drive power F via the planetary gears 115 to the ring gear 112 that is rotationally fixed to the main axle 60. The rims 50 are rotationally fixed to the planetary gear carrier 114 and rotate together with the planetary carrier 114 about the rotational axis extending along the shaft 120. The braking disc 132 is formed on an additional hollow shaft extending from the sun gear 166 that in turn couples to the rims 50 via an additional planetary gearbox, wherein the sun gear of this additional gearbox is rotationally fixed to the braking disc 132 and the ring gear is rotationally fixed to the rims 50. The planetary carrier 164 of this additional gearbox is rotationally fixed to the main axle 60 and therefore to the frame 200.

Embodiments provide the advantages of enabling small-sized braking system that can be used for long-haul commercial vehicles. These vehicles use nowadays air disc brakes that have to provide (e.g. for heavy-duty vehicles) a clamping force of a caliper of about 230 kN (30 kNm max. torque demand) and have a rotational speed of up to 400 - 550 *1/min corresponding to vehicle speeds of about 80 - 100 km/h depending on the wheel type. Embodiments are able to meet these demands. For example, a possible realization of the high-speed brake has a max. rotation speed of 1400 - 1800 *1/min or more, while needing only a clamping force of the caliper of about 65 kN (-8,6 kNm max. brake torque) based on a transmission ratio with -3,5:1 between the brake disc and the wheel. Consequently, the size of the brake actuator can be reduced significantly. This provides the further advantage of a lower energy consumption, especially in case of an electric brake actuator.

The description and drawings merely illustrate the principles of the invention.

### LIST OF REFERENCE SIGNS

- 10: drive shaft
- 15: toothed wheel of the drive shaft
- 50: rim(s)
- 60: (main) axle
- 110,160,510: gearbox(es) (e.g. planetary gear boxes)
- 112,162,512: ring gear(s)
- 114,164,514: planetary carrier(s)
- 115: planetary gears
- 116,166,516: sun gear(s)
- 120: (driving) shaft
- 125: toothed wheel of shaft
- 130,530: brake unit
- 132,532: rotating part (e.g. brake disc, drum)
- 134: brake actuator(s)
- 135: brake pads
- 140: bearing(s)
- 150: sealing(s)

## Claims

1. A powertrain including a braking system for a twin tire axle of the long-haul commercial vehicle, the twin tire axle coupling to rims (50) for the twin tires and to a driving engine,
**characterized by**: rims (50) for the twin tires;
- a gearbox (110) with at least one part configured to be attached to the rims (50);
- a shaft (120) configured to connect the gear box (110) with the drive engine; and
- a brake unit (130) configured to brake a rotating part (132) of the braking system that is rotatable at a higher rotational speed than the rims (50),
wherein the gearbox (110) and at least part of the brake unit (130) are adapted to be placed inside the rims (50) of the twin tires.

2. The powertrain according to claim 1,
**characterized in that**
the brake unit (130) is a disc brake (132) or drum brake with the disc or drum being the rotating part (132) and with at least one brake actuator (134) to brake the disc or drum, wherein at least part of the brake actuator (134) and the disc or drum are arranged inside the rims (50).

3. The powertrain according to claim 1 or claim 2, the vehicle comprising a main axle (60),
**characterized in that**
the gear box (110) is a planetary gear box with a ring gear (112), a planetary carrier (114) and a sun gear (116),
wherein the sun gear (116) is driven by the engine via the shaft (120), one of the ring gear (112) and the planetary carrier (114) is rotationally fixed to the rims (50), and the other of the ring gear (112) and the planetary carrier (114) is fixed to the main axle (60).

4. The powertrain according to claim 3,
**characterized in that**
the shaft (120) comprises a hollow portion surrounding at least partially the main axle (60), and **in that**
the planetary carrier (114) is rotationally fixed to the main axle (60).

5. The powertrain according to claim 3,
**characterized in that**
the main axle (60) comprises a hollow portion surrounding at least partially the shaft (120),
the ring gear (112) is rotational fixed to the main axle (60), and **in that** the planetary carrier (114) is rotationally fixed to the rims (50).

6. The powertrain according to claim 3,
**characterized in that**
the main axle (60) is formed a hollow shaft surround at least partially the shaft (120),
the planetary carrier (114) is rotational fixed to the main axle (60), and **in that**
the ring gear (112) is rotational fixed to the rims (50).

7. The powertrain according to one of claims 4 to 6,
**characterized in that**
the rotating part (132) of the brake is rotationally fixed to shaft (120).

8. The powertrain according to claim 3,
**characterized in that**
the main axle (60) is formed a hollow shaft surrounding at least partially the shaft (120), and the ring gear (112) is rotational fixed to the main axle (60).

9. The powertrain according to claim 8,
**characterized by**
an additional hollow shaft surrounding partially the main axle (60); and
an additional gear box (160) arranged between the rims (50) and the additional hollow shaft, wherein the additional gear box (160) includes in particular an additional planetary gear box with a planetary carrier (164) rotationally fixed to the main axle (60),
and wherein the rotating part (132) is rotationally fixed to the additional hollow shaft.

10. The powertrain according to claim 8 or claim 9,
**characterized in that**
the gear box (110) provides the only bearing for the shaft (120) inside the rims (50).

11. The powertrain according to one of the preceding claims
**characterized by:**
- a drive engine.

12. The powertrain according to claim 11,
**characterized in that**
the drive engine is an electric engine.

13. The powertrain according to claim 11 or claim 12,
**characterized by**
a further gear box is arranged between the drive engine and the brake system.

14. A commercial vehicle, in particular a long-haul vehicle with a twin tire axle
**characterized by**
a powertrain according to one of claims 1 to 13.

## Patentansprüche

1. Antriebsstrang, umfassend ein Bremssystem für eine Zwillingsreifenachse des Langstreckennutzfahrzeugs, wobei die Zwillingsreifenachse mit Felgen (50) für die Zwillingsreifen und mit einem Antriebsmotor gekoppelt ist,
**gekennzeichnet durch**: Felgen (50) für die Zwillingsreifen;
- ein Getriebe (110) mit mindestens einem Teil, der dazu ausgelegt ist, an den Felgen (50) angebracht zu sein;
- eine Welle (120), die dazu ausgelegt ist, das Getriebe (110) mit dem Antriebsmotor zu verbinden; und
- eine Bremseinheit (130), die dazu ausgelegt ist, einen drehenden Teil (132) des Bremssystems zu bremsen, der bei einer höheren Drehzahl drehbar ist als die Felgen (50),
wobei das Getriebe (110) und zumindest ein Teil der Bremseinheit (130) dazu eingerichtet sind, in den Felgen (50) der Zwillingsreifen platziert zu sein.

2. Antriebsstrang nach Anspruch 1,
**dadurch gekennzeichnet, dass**
die Bremseinheit (130) eine Scheibenbremse (132) oder Trommelbremse ist, wobei die Scheibe oder Trommel der drehende Teil (132) ist, und mit mindestens einem Bremsaktuator (134) zum Bremsen der Scheibe oder Trommel, wobei zumindest ein Teil des Bremsaktuators (134) und der Scheibe oder Trommel in den Felgen (50) angeordnet sind.

3. Antriebsstrang nach Anspruch 1 oder Anspruch 2, wobei das Fahrzeug eine Hauptachse (60) umfasst,
**dadurch gekennzeichnet, dass**
das Getriebe (110) ein Planetengetriebe mit einem Hohlrad (112), einem Planetenträger (114) und einem Sonnenrad (116) ist,
wobei das Sonnenrad (116) durch den Motor über die Welle (120) angetrieben wird, eines des Hohlrads (112) und des Planetenträgers (114) drehfest an den Felgen (50) fixiert ist und das andere des Hohlrads (112) und des Planetenträgers (114) an der Hauptachse (60) fixiert ist.

4. Antriebsstrang nach Anspruch 3,
**dadurch gekennzeichnet, dass**
die Welle (120) einen hohlen Abschnitt umfasst, der zumindest teilweise die Hauptachse (60) umgibt, und dadurch, dass
der Planetenträger (114) drehfest an der Hauptachse (60) fixiert ist.

5. Antriebsstrang nach Anspruch 3,
**dadurch gekennzeichnet, dass**
die Hauptachse (60) einen hohlen Abschnitt umfasst, der zumindest teilweise die Welle (120) umgibt,
das Hohlrad (112) drehfest an der Hauptachse (60) fixiert ist, und dadurch, dass
der Planetenträger (114) drehfest an den Felgen (50) fixiert ist.

6. Antriebsstrang nach Anspruch 3,
**dadurch gekennzeichnet, dass**
die Hauptachse (60) als eine Hohlwelle ausgebildet ist, die zumindest teilweise die Welle (120) umgibt,
der Planetenträger (114) drehfest an der Hauptachse (60) fixiert ist, und dadurch, dass
das Hohlrad (112) drehfest an den Felgen (50) fixiert ist.

7. Antriebsstrang nach einem der Ansprüche 4 bis 6, **dadurch gekennzeichnet, dass**
der drehende Teil (132) der Bremse drehfest an der Welle (120) fixiert ist.

8. Antriebsstrang nach Anspruch 3,
**dadurch gekennzeichnet, dass**
die Hauptachse (60) als eine Hohlwelle ausgebildet ist, die zumindest teilweise die Welle (120) umgibt, und das Hohlrad (112) drehfest an der Hauptachse (60) fixiert ist.

9. Antriebsstrang nach Anspruch 8,
**gekennzeichnet durch**
eine zusätzliche Hohlwelle, die teilweise die Hauptachse (60) umgibt; und
ein zusätzliches Getriebe (160), das zwischen den Felgen (50) und der zusätzlichen Hohlwelle angeordnet ist, wobei das zusätzliche Getriebe (160) insbesondere ein zusätzliches Planetengetriebe mit einem Planetenträger (164) umfasst, der drehfest an der Hauptachse (60) fixiert ist,
und wobei der drehende Teil (132) drehfest an der zusätzlichen Hohlwelle fixiert ist.

10. Antriebsstrang nach Anspruch 8 oder Anspruch 9, **dadurch gekennzeichnet, dass**
das Getriebe (110) das einzige Lager für die Welle (120) in den Felgen (50) bereitstellt.

11. Antriebsstrang nach einem der vorhergehenden Ansprüche,
**gekennzeichnet durch:**
- einen Antriebsmotor.

12. Antriebsstrang nach Anspruch 11,
**dadurch gekennzeichnet, dass**
der Antriebsmotor ein elektrischer Motor ist.

13. Antriebsstrang nach Anspruch 11 oder Anspruch 12, **gekennzeichnet durch**
ein weiteres Getriebe ist zwischen dem Antriebsmotor und dem Bremssystem angeordnet.

14. Nutzfahrzeug, insbesondere ein Langstreckennutzfahrzeug mit einer Zwillingsreifenachse, **gekennzeichnet durch**
einen Antriebsstrang nach einem der Ansprüche 1 bis 13.

## Revendications

1. Groupe motopropulseur comprenant un système de freinage pour un essieu à deux pneumatiques du véhicule industriel grand routier, l'essieu à deux pneumatiques étant accouplé à des jantes (50) pour les deux pneumatiques et à un moteur de propulsion,
**caractérisé par :** des jantes (50) pour les deux pneumatiques ;
- une boîte de vitesses (110) ayant au moins une partie configurée pour être fixée aux jantes (50) ;
- un arbre (120) configuré pour relier la boîte de vitesses (110) au moteur de propulsion ; et
- une unité (130) de freinage configurée pour freiner une partie (132) tournante du système de freinage, qui peut tourner à une vitesses de rotation plus grande que les jantes (50),
dans lequel la boîte de vitesses (110) et au moins une partie de l'unité (130) de freinage sont conçues pour être placées à l'intérieur des jantes (50) des deux pneumatiques.

2. Groupe motopropulseur suivant la revendication 1
**caractérisé en ce que**
l'unité (130) de freinage est un frein (132) à disque ou un frein à tambour ayant le disque ou le tambour qui est la partie (132) tournante et ayant au moins un actionneur (134) de frein pour freiner le disque ou le tambour, dans lequel au moins une partie de l'actionneur (134) de frein et le disque ou le tambour sont disposés à l'intérieur des jantes (50).

3. Groupe motopropulseur suivant la revendication 1 ou la revendication 2, dans lequel le véhicule comprend un essieu (60) principal,
**caractérisé en ce que**
la boîte de vitesses (110) est une boîte de vitesses épicycloïdale ayant une couronne (112), un porte-satellite (114) et un engrenage (116) principal,
dans lequel l'engrenage (116) principal est entraîné par le moteur par l'intermédiaire de l'arbre (120), l'un de la couronne (112) et du porte-satellite (114) est fixé à rotation aux jantes (50) et l'autre de la couronne (112) et du porte-satellite (114) est fixé à l'essieu (60) principal.

4. Groupe motopropulseur suivant la revendication 3,
**caractérisé en ce que**
l'arbre (120) comprend une partie creuse entourant au moins en partie l'essieu (60) principal, et **en ce que**
le porte-satellite (114) est fixé à rotation à l'essieu (60) principal.

5. Groupe motopropulseur suivant la revendication 3,
**caractérisé en ce que**
l'essieu (60) principal comprend une partie creuse entourant au moins en partie l'arbre (120),
la couronne (112) est fixée à rotation à l'essieu (60) principal, et **en ce que**
le porte-satellite (114) est fixé à rotation aux jantes (50).

6. Groupe motopropulseur suivant la revendication 3,
**caractérisé en ce que**
l'essieu (60) principal est formé d'un arbre creux entourant au moins partiellement l'arbre (120),
le porte-satellite (114) est fixé à rotation à l'essieu (60) principal, et **en ce que**
la couronne (112) est fixée à rotation aux jantes (50).

7. Groupe motopropulseur suivant l'une des revendications 4 à * 6,
**caractérisé en ce que**
la partie (132) tournante du frein est fixée à rotation à l'arbre (120) .

8. Groupe motopropulseur suivant la revendication 3,
**caractérisé en ce que**
l'essieu (60) principal est formé d'un arbre creux entourant au moins en partie l'arbre (120), et la couronne (112) est fixée à rotation à l'essieu (60) principal.

9. Groupe motopropulseur suivant la revendication 8,
**caractérisé par**
un arbre creux supplémentaire entourant au moins en partie l'essieu (60) principal, et
une boîte de vitesses (160) supplémentaire montée entre les jantes (50) et l'arbre creux supplémentaire, dans lequel la boîte de vitesses (160) supplémentaire comprend, en particulier, une boîte de vitesses épicycloïdale ayant un porte-satellite (164) fixé à rotation à l'essieu (60) principal,
et dans lequel la partie (132) tournante est fixée à rotation à l'arbre creux supplémentaire.

10. Groupe motopropulseur suivant la revendication 8 ou la revendication 9,
**caractérisé en ce que**
la boîte de vitesses (110) fournit le seul palier pour l'arbre (120) à l'intérieur des jantes (50).

11. Groupe motopropulseur suivant l'une des revendications précédentes,
**caractérisé par**
- un moteur de commande.

12. Groupe motopropulseur suivant la revendication 11, **caractérisé en ce que**
le moteur de commande est un moteur électrique.

13. Groupe motopropulseur suivant la revendication 11 ou la revendication 12,
**caractérisé en ce qu'**
une autre boîte de vitesses est montée entre le moteur de commande et le système de freinage.

14. Véhicule industriel, en particulier véhicule grand routier, ayant un essieu à deux pneumatiques,
**caractérisé par**
un groupe propulseur suivant l'une des revendications 1 à 13.
